# FASCICULE DE BREVET EUROPEEN

(11) **EP 1 308 209 B1**
(45) Date de publication et mention de la délivrance du brevet: **06.06.2012**
(21) Numéro de dépôt: 02292696.8
(22) Date de dépôt: 30.10.2002
(51) Int. Cl.: B01J 35/00, B01J 23/30, B01J 27/224, B01D 53/94, B01J 23/02, B01J 23/04, B01J 23/00

(54) **Composition contenant de l'oxyde de cuivre utilisable comme piège à NOx et son utilisation dans le traitement des gaz d'échappement**
Zusammemsetzungen enthaltend Kupferoxid verwendbar als NOx-Speicher und ihre Verwendung zur Behandlung von Abgasen
Composition containing copper oxide suitable as NOx trap and its use in the treatment of exhaust gases

(30) Priorité: 31.10.2001 FR 0114150
(43) Date de publication de la demande: 07.05.2003
(73) Titulaire: Renault s.a.s., 92100 Boulogne Billancourt (FR)
(72) Inventeur: Guyon, Marc, 91290 Arpajon (FR); Figueras, François, 69003 Lyon (FR); Clacens, Jean Marc, 69100 Villeurbanne (FR); Beziat, Jean Christophe, 91290 Arpajon (FR); Kochkar, Hafedh, Phillipsburg, NJ 08865 (US)

(56) Documents cités:
- EP-A- 0 526 896
- EP-A- 0 577 438
- EP-A- 0 719 580
- EP-A- 0 764 459
- WO-A-00/59611
- WO-A-01/51178
- WO-A-99/11372

## Description

La présente invention est relative à une nouvelle composition utilisable comme piège à NOₓ, (x étant égal à 2 ou 3), à un dispositif comprenant une telle composition et à son utilisation dans le traitement des gaz d'échappement.

La forte toxicité des oxydes d'azote (NOₓ), leur rôle dans la formation des pluies acides et de l'ozone troposphérique ont conduit à la mise en place de normes sévères limitant les rejets de ces composés. Pour satisfaire ces normes, il est généralement nécessaire d'éliminer au moins une partie de ces oxydes présents dans les gaz d'échappement des moteurs automobiles ou stationnaires, des turbines des centrales thermiques et des incinérateurs.

La réduction des NOₓ dans un mélange globalement oxydant, comme par exemple les gaz d'échappement d'un moteur d'automobiles à mélange pauvre en carburant, c'est-à-dire riche en oxygène, s'effectue avec un très faible rendement. Des constructeurs ont ainsi envisagé de piéger les NOₓ sur un solide pendant le fonctionnement normal du moteur en mélange pauvre, puis de les désorber et les réduire par un passage transitoire en mélange stoechiométrique ou riche.

Cette approche suppose de combiner sur une même formulation catalytique un catalyseur « trois voies », et un matériau permettant le stockage des NOₓ sous forme de nitrates. Ce type de formulation comporte classiquement de l'alumine sur laquelle sont déposés des éléments alcalins et/ou alcalinoterreux, des terres rares, et des métaux précieux comme le platine et éventuellement le rhodium.

Toutefois, de même que l'oxyde d'azote NO est oxydé en NO₂ en milieu oxydant, ce qui conduit à son adsorption sous forme de nitrates, le dioxyde de soufre SO₂ est également oxydé en SO₃. Or, SO₃ est plus acide que NO₂, et s'adsorbe donc plus facilement sur le matériau de stockage sous forme de sulfates. Ces sulfates sont plus stables que les nitrates correspondant, donc plus difficilement désorbés. Lors de l'étape de régénération, appelée aussi étape de purge, on introduit un excès de carburant dans le moteur, afin de désorber et réduire les NOₓ. La désorption plus difficile des sulfates entraîne une baisse de la capacité de stockage des NOₓ du catalyseur, ce qui entraîne une augmentation de la fréquence de purge, et provoque donc une surconsommation de carburant. Il est ainsi nécessaire de prévoir un moyen de désulfatation du piège à NOₓ lorsque sa capacité de stockage des NOₓ est devenue trop faible.

Les solutions proposées consistent le plus souvent à jouer sur l'acidité du support pour défavoriser le stockage des SOₓ et/ou favoriser leur déstockage. Il a ainsi été utilisé, tel que décrit dans le document S.Matsumoto, Applied Catalysis 25 (2000) 115-124, de l'alumine dopée au lithium, avec une incorporation d'oxyde de titane.

Une autre possibilité, tel qu'exposé dans le brevet JP 8281105 A2, est de doper le platine par du lithium qui inhibe dans une grande mesure l'oxydation de SO₂ en SO₃. EP-A-0 577 438 un catalyseur pour des gaz d'échappement.

La présente invention propose une composition utilisable comme piège à NOₓ remédiant à ces inconvénients.

En particulier, la Demanderesse vient de découvrir de façon surprenante que l'association d'un catalyseur d'oxydation de NO à base d'oxydes sur un premier support avec un additif à caractère basique sur un deuxième support pouvait être utilisée comme piège à NOₓ. Cette composition ne contient pas de métaux précieux, et est donc moins onéreuse. Elle se montre en outre très peu sensible à la présence de SO₂ dans les gaz d'échappement. Cette faible sensibilité à l'empoisonnement par le soufre permet ainsi d'éviter la diminution d'efficacité du catalyseur pour le stockage des NOₓ.

Ces résultats sont particulièrement surprenants lorsque l'on compare ces résultats par rapport à ceux obtenus avec des catalyseurs classiques qui voient leur capacité d'adsorption fortement réduite en présence de SO₂.

La présente invention a donc pour objet une composition utilisable comme piège à NOₓ comprenant un catalyseur d'oxydation de NO à base d'oxydes sur un premier support et un additif à caractère basique sur un deuxième support.

L'invention vise également un dispositif catalytique comprenant une telle composition.

L'invention a également pour objet l'utilisation comme catalyseur ou support de catalyseur de cette composition.

La composition utilisable comme piège à NOₓ, conforme à l'invention, est décrite dans le libellé de la revendication indépendante 1.

L'oxyde de cuivre CuO est capable d'oxyder NO en NO₂, et ceci dès 200°C. Alors que le caractère basique de cet oxyde permet d'adsorber SO₂, molécule acide, le contrôle de la dispersion de l'oxyde permet de réduire l'adsorption de SO₂ car la basicité de l'oxyde décroît avec la dispersion. Ainsi, l'oxyde de cuivre CuO est présent dans des proportions en poids comprises entre 2 et 10%, de préférence entre 4 et 6%. La taille des particules de l'oxyde de cuivre CuOest comprise entre 2 et 15 nm, de préférence entre 3 et 8 nm.

Le premier support joue le rôle de dispersant de l'oxyde. Il est donc préférable qu'il ne fritte pas trop facilement par traitement thermique vers 650-700°C. Il est également souhaitable qu'il ne forme pas de composé avec l'élément appartenant aux groupes VI_{A}, VII_{A}, VIII et I_{B} du tableau périodique, ce qui conduirait à une dispersion de l'élément après calcination par exemple.

Comme premier support, on utilise de préférence des oxydes ne formant pas d'oxyde mixte avec le métal du groupe VI, VII_{A}, VIII et I_{B} du tableau périodique, comme par exemple la zircone ou l'oxyde de titane TiO₂, ou peu réactifs comme l'alumine α. L'alumine γ peut également être utilisée. La zircone peut être stabilisée par des cations divalents tels que Mg²⁺, Ca²⁺, ou trivalents tels que Ce³⁺, Y³⁺, ou former un oxyde mixte avec le titane. On peut également utiliser tout mélange de ces supports.

De préférence, le premier support a une surface spécifique supérieure à 10 m²/g. La surface spécifique de l'alumine est de préférence supérieure à 250 m²/g, et encore de préférence comprise entre 250 et 500 m²/g. La surface spécifique de la zircone est de préférence supérieure à 100 m²/g, et encore de préférence comprise entre 100 et 250 m²/g.

Le nitrate de potassium KNO₃ qui est apte à stocker NO₂ sous forme de nitrates, est déposé sur un deuxième support.

De préférence, le deuxième support est choisi parmi l'alumine α, l'alumine γ, la zircone, la magnésie, l'oxyde de titane et leurs mélanges.

De préférence, le deuxième support a une surface spécifique supérieure à 10 m²/g, et encore de préférence comprise entre 20 et 300 m²/g. La surface spécifique de l'alumine est de préférence supérieure à 250 m²/g, et encore de préférence comprise entre 250 et 500 m²/g. La surface spécifique de la zircone est de préférence supérieure à 100 m²/g, et encore de préférence comprise entre 100 et 250 m²/g.

Le poids du premier composant avec le premier support est de préférence compris entre 20 et 75% du poids de la composition, et encore de préférence entre 30 et 70% du poids de la composition.

L'invention a également pour objet un dispositif catalytique, et notamment un dispositif catalytique pour le traitement d'un gaz d'échappement de moteur à combustion interne, comprenant une composition selon l'invention.

Selon un mode de réalisation du dispositif selon l'invention, le dispositif comprend un revêtement à propriétés catalytiques et incorporant ladite composition, ce revêtement étant déposé sur un substrat du type par exemple monolithe métallique ou céramique.

Ainsi, la composition selon l'invention peut avantageusement, après imprégnation sur un monolithe céramique ou métallique, être utilisée dans la ligne d'échappement d'un moteur Diesel ou d'un moteur à essence fonctionnant en mélange pauvre. La composition peut être utilisée seule ou associée à un deuxième catalyseur comme par exemple un catalyseur d'oxydation, un catalyseur « trois voies », un catalyseur de type « HC-trap », ou un filtre à particules catalysé ou non.

L'invention concerne également l'utilisation d'une composition décrite plus haut comme catalyseur ou support de catalyseur, et notamment pour la réduction des NOₓ dans un gaz d'échappement.

Les compositions selon l'invention sont particulièrement bien adaptées pour un gaz d'échappement contenant SO₂.

Les exemples suivants sont destinés à illustrer l'invention sans pour autant présenter un caractère limitatif.

### Exemples de premiers composants

On prépare de l'oxyde de cuivre CuO sur un support de zircone sulfatée par imprégnation à sec :pour 5 % de Cu on utilise 4,75 g de support, imprégné par une solution de 4,75 mL d'eau contenant 0,93g de Cu(NO₃)₂.2,5H₂O. le support est une zircone commerciale commercialisée par la société Magnesium Electronics contenant 3,9% de soufre, calcinée à 600°C. après séchage à 120°C, l'échantillon est calciné à 500°C sous air pendant trois heures.

Pour CuO sur un support de zircone, une zircone commercialisée par la société Magnesium Electronics, non sulfatée, a également été utilisée. Un support WO₃/ZrO₂ a été préparé par interaction de la forme hydratée de l'oxyde de zirconium (10g) avec une solution de (NH₄)H₂W₁₂O₄₀, 11H₂O (3,852g) en solution dans 15,2 mL d'eau, le solide est ensuite séché sous vide, puis à l'étuve, puis calciné sous air à 800°C.

### Exemples de deuxièmes composants

On procède à la synthèse de KNO₃ sur un support d'alumine.

Les caractéristiques des alumines employées sont indiquées dans le tableau 1 :

**Tableau 1 : Caractéristiques des alumines employées**

| support | Alumine γ | Alumine α |
|---|---|---|
| nom commercial | SCP350 Rhône-Poulenc | SPH 512 Rhône-Poulenc |
| forme | Poudre 10-120 µm | Billes de 2 à 4 mm |
| S_{BET} | 400 m²/g | 10,5 m²/g |
| Vₚₒᵣₑᵤₓ | 0,30 mL/g | 0,465 mL/g |
| dₐₚₚₐᵣₑₙₜₑ | 0,8 g/mL | 0,83 g/mL |
| Impuretés connues | Na₂O = 800 ppm Fe₂O₃ = 250 ppm SiO₂ = 200 ppm | Na₂O= 680 ppm CaO = 530 ppm SO₄ < 400 ppm |

L'alumine utilisée et le sel de potassium sont préalablement séchés à l'étuve à 100°C. Les quantités nécessaires sont mélangées dans un mortier pendant 15 minutes, puis 0,5 mL d'eau permutée par gramme de mélange sont ajoutés. Après un nouveau mixage, la pâte résultante est séchée à l'étuve à 110°C pendant une nuit.

Le tableau 2 montre des exemples de préparation de solides utilisant différentes alumines et différentes charges en KNO₃. La dernière colonne indique le nombre d'atomes de potassium par m² d'alumine de départ.

**Tableau 2 : synthèse de solides KNO₃/Al₂O₃**

| Solide | alumine | KNO₃ (g) | % de KNO₃ massique | Ions K⁺/m² |
|---|---|---|---|---|
| 12KNO₃/γAl₂O₃ | γ (5g) | 3,525 | 41,35 % | 1,05.10¹⁹ |
| 12KNO₃/αAl₂O₃ | α (5g) | 3,527 | 41,36 % | 4.10²⁰ |
| 8KNO₃/γAl₂O₃ | γ (5g) | 5,012 | 50,1 % | 1,49.10¹⁹ |
| 8KNO₃/γAl₂O₃ | α (5g) | 0,094 | 1,84 % | 1,06.10¹⁹ |

### Propriétés catalytiques

Un mélange CuO sur un support de zircone sulfatée comme premier composant, avec KNO₃ sur un support d'alumine γ comme deuxième composant, dont les proportions respectives en premier et deuxième composant sont 30% et 70% massiques, est utilisé comme piège à NOₓ dans un réacteur selon un protocole de test qui permet de mesurer la capacité du solide à adsorber les NOₓ à une température donnée, en l'absence et en présence de SO₂.

Les compositions testées sont traitées préalablement à 500-550°C sous courant d'oxygène à 15% dans l'azote. Le réacteur est ensuite refroidi jusqu'à une température d'adsorption de 200°C.

Le mélange réactionnel, de composition 750 ppm NO, 10% O₂. 5% H₂O dans l'azote, est ensuite introduit dans le réacteur, après stabilisation du flux en by-pass pendant 40 minutes. Après stabilisation du système, un flux d'air est introduit et une rampe de température (5°C/mn) est appliquée entre 200 et 700°C. La composition du mélange réactionnel est identifiée par un analyseur infrarouge. Après refroidissement jusqu'à la température initiale, un test d'empoisonnement à SO₂ est réalisé en ajoutant au mélange gazeux 25 ppm de SO₂ pendant une heure, suivi d'une désorption à température programmée (TPD) de NO.

Le tableau 3 montre les capacités d'adsorption de la composition KNO₃/γAl₂O₃ + CuO/ZrS, les deux composants représentant respectivement 30 et 70% du mélange, comparées aux performances d'un catalyseur commercial comprenant 0,47% Pt, 3% Ba et 1% Cs (pourcentages en poids).

**Tableau 3 : capacité d'adsorption d'un exemple de composition KNO₃/Al₂O₃ + CuO/ZrS comparée à un catalyseur commercial**

| adsorption | Capacité d'adsorption en mg NO par g de composition | |
|---|---|---|
| | Catalyseur commercial | KNO₃/γAl₂O₃ + CuO/ZrS |
| Première adsorption (mélange O₂+NO+H₂O+N₂) | 31,4 | 51,2 |

| Empoisonnement pendant une heure (mélange O₂+NO+H₂O+N₂+SO₂) | | |
|---|---|---|
| Deuxième adsorption (mélange O₂+NO+H₂O+N₂) | 15,2 | 51,4 |

Le catalyseur obtenu par mélange des deux solides montre ainsi une meilleure capacité d'adsorption qu'un catalyseur commercial, et il est remarquable de noter que la capacité d'adsorption reste la même après traitement en présence de SO₂ pendant une heure, alors que le catalyseur commercial voit sa capacité d'adsorption divisée par deux.

## Revendications

1. Composition utilisable comme piège à NOₓ, **caractérisée en ce qu'**elle comprend :
- de l'oxyde de cuivre sur un premier support, l'oxyde de cuivre étant présent dans des proportions en poids comprises entre 2 et 10%, de préférence entre 4 et 6%, et la taille des particules d'oxyde de cuivre étant comprise entre 2 et 15 nm, de préférence entre 3 et 8 nm, et
- du nitrate de potassium, sur un deuxième support distinct du premier support.

2. Composition selon la revendication 1, **caractérisée en ce que** le premier support est choisi parmi l'alumine α, l'alumine γ, la zircone, l'oxyde de titane et leurs mélanges.

3. Composition selon l'une des revendications 1 à 2, **caractérisée en ce que** le deuxième support est choisi parmi l'alumine α, l'alumine γ, la zircone, la magnésie, l'oxyde de titane et leurs mélanges.

4. Composition selon l'une des revendications 1 à 3, **caractérisée en ce que** le deuxième support a une surface spécifique supérieure à 10 m²/g, et encore de préférence comprise entre 20 et 300 m²/g.

5. Composition selon l'une des revendications 1 à 4, **caractérisée en ce que** le deuxième support est de l'alumine.

6. Composition selon l'une des revendications 1 à 5, **caractérisée en ce que** le poids de l'oxyde de cuivre avec le premier support est de préférence compris entre 20 et 75% du poids de la composition, et encore de préférence entre 30 et 70% du poids de la composition.

7. Dispositif catalytique comprenant une composition selon l'une quelconque des revendications 1 à 6.

8. Utilisation comme catalyseur ou support de catalyseur d'une composition selon l'une quelconque des revendications 1 à 6.

9. Utilisation d'une composition selon l'une quelconque des revendications 1 à 6 pour la réduction des oxydes d'azote dans un gaz d'échappement.

10. Utilisation selon la revendication 9, **caractérisé en ce que** le gaz d'échappement contient SO₂.

## Claims

1. Composition that can be used as an NOₓ trap, **characterized in that** it comprises:
- copper oxide on a first support, the copper oxide being present in proportions by weight of between 2 and 10%, preferably between 4 and 6%, and the size of the copper oxide particles being between 2 and 15 nm, preferably between 3 and 8 nm; and
- potassium nitrate on a second support distinct from the first support.

2. Composition according to Claim 1, **characterized in that** the first support is chosen from α-alumina, γ-alumina, zirconia, titanium oxide and mixtures thereof.

3. Composition according to either of Claims 1 and 2, **characterized in that** the second support is chosen from α-alumina, γ-alumina, zirconia, magnesia, titanium oxide and mixtures thereof.

4. Composition according to one of Claims 1 to 3, **characterized in that** the second support has a specific surface area of greater than 10 m²/g and more preferably between 20 and 300 m²/g.

5. Composition according to one of Claims 1 to 4, **characterized in that** the second support is an alumina support.

6. Composition according to one of Claims 1 to 5, **characterized in that** the weight of the copper oxide with the first support is preferably between 20 and 75% of the weight of the composition, and more preferably between 30 and 70% of the weight of the composition.

7. Catalytic device comprising a composition according to any one of Claims 1 to 6.

8. Use as catalyst or catalyst support of a composition according to any one of Claims 1 to 6.

9. Use of a composition according to any one of Claims 1 to 6 for the reduction of nitrogen oxides in an exhaust gas.

10. Use according to Claim 9, **characterized in that** the exhaust gas contains SO₂.

## Patentansprüche

1. Zusammensetzung, die als NOₓ-Falle verwendet werden kann, **dadurch gekennzeichnet, dass** sie:
- Kupferoxid auf einem ersten Träger, wobei das Kupferoxid in Gewichtsanteilen zwischen 2 und 10%, vorzugsweise zwischen 4 und 6%, vorliegt und die Größe der Kupferoxidteilchen zwischen 2 und 15 nm, vorzugsweise zwischen 3 und 8 nm, liegt, und
- Kaliumnitrat auf einem zweiten Träger, der von dem ersten Träger verschieden ist,
umfasst.

2. Zusammensetzung nach Anspruch 1, **dadurch gekennzeichnet, dass** der erste Träger aus α-Aluminiumoxid, γ-Aluminiumoxid, Zirconiumoxid, Titanoxid und Mischungen davon ausgewählt ist.

3. Zusammensetzung nach einem der Ansprüche 1 bis 2, **dadurch gekennzeichnet, dass** der zweite Träger aus α-Aluminiumoxid, γ-Aluminiumoxid, Zirconiumoxid, Magnesiumoxid, Titanoxid und Mischungen davon ausgewählt ist.

4. Zusammensetzung nach einem der Ansprüche 1 bis 3, **dadurch gekennzeichnet, dass** der zweite Träger eine spezifische Oberfläche von mehr als 10 m²/g und weiter bevorzugt zwischen 20 und 300 m²/g aufweist.

5. Zusammensetzung nach einem der Ansprüche 1 bis 4, **dadurch gekennzeichnet, dass** es sich bei dem zweiten Träger um Aluminiumoxid handelt.

6. Zusammensetzung nach einem der Ansprüche 1 bis 5, **dadurch gekennzeichnet, dass** das Gewicht des Kupferoxids mit dem ersten Träger vorzugsweise zwischen 20 und 75% des Gewichts der Zusammensetzung und weiter bevorzugt zwischen 30 und 70% des Gewichts der Zusammensetzung liegt.

7. Katalytische Vorrichtung, umfassend eine Zusammensetzung nach einem der Ansprüche 1 bis 6.

8. Verwendung einer Zusammensetzung nach einem der Ansprüche 1 bis 6 als Katalysator oder Katalysatorträger.

9. Verwendung einer Zusammensetzung nach einem der Ansprüche 1 bis 6 zur Reduktion von Stickstoffoxiden in einem Abgas.

10. Verwendung nach Anspruch 9, **dadurch gekennzeichnet, dass** das Abgas SO₂ enthält.
